# FASCICULE DE BREVET EUROPEEN

(11) **EP 2 504 672 B1**
(45) Date de publication et mention de la délivrance du brevet: **07.03.2018**
(21) Numéro de dépôt: 10799114.3
(22) Date de dépôt: 26.11.2010
(51) Int. Cl.: G01F 1/12, G01F 25/00, G05D 7/06, F02C 9/28, F02D 41/22

(54) **PROCEDE ET DISPOSITIF DE CONTROLE EN TEMPS REEL D'UN SYSTEME DE MESURE DE DEBIT DE CARBURANT**
CONTROL VERFAHREN UND GERÄT FÜR EINEN KRAFTSTOFFZUMESSSYSTEMS
REAL TIME CONTROL METHOD AND APPARATUS FOR A FUEL FLOW METERING SYSTEM

(30) Priorité: 27.11.2009 FR 0958429
(43) Date de publication de la demande: 03.10.2012
(73) Titulaire: Snecma, 75015 Paris (FR)
(72) Inventeur: GODEL, Franck, F-77590 Chartrettes (FR); GUEIT, Nicolas, Marie, Pierre, F-75006 Paris (FR); MAILLE, Julien, Marcel, Roger, F-91530 Saint Cheron (FR); PONTALLIER, Benoît, F-75017 Paris (FR)
(74) Mandataire: Intès, Didier Gérard André
(86) Numéro de dépôt international: PCT/FR2010/052544
(87) Numéro de publication internationale: WO 2011/064509

(56) Documents cités:
- GB-A- 2 390 691
- US-A- 5 115 635
- US-A- 5 279 107

## Description

L'invention se rapporte à un procédé de contrôle en temps réel d'un système de mesure de débit de carburant d'un moteur d'avion équipé d'un débitmètre massique du type inductif, connu en soi. L'invention a principalement pour but de permettre à l'ordinateur de bord de distinguer une information de débit nul ou faible valide d'une information semblable erronée résultant d'une autre cause telle qu'une défaillance du capteur ou une erreur de maintenance.

Sur de nombreux avions, on utilise un type de débitmètre massique élaborant de manière répétitive des impulsions par paires. L'écart de temps entre les deux impulsions d'une paire est représentatif du débit de liquide qui traverse le débitmètre. Cette mesure d'écart temporel est adressée à un calculateur qui l'utilise pour un certain nombre d'opérations, par exemple de régulation, de gestion de panne ou de détermination de la consommation du moteur.

Pour un débit nul, le débitmètre n'élabore aucun signal.

Or, on sait que dans le cas d'un fonctionnement en conditions givrantes, un débitmètre de ce type peut être fortement perturbé. Il se peut aussi qu'une erreur humaine pendant une opération de maintenance, (comme par exemple un connecteur de harnais laissé ouvert), se traduise par l'absence de signal à la sortie du débitmètre.

Le document US 5,115,635 décrit un système dans lequel le débit mesuré par le débitmètre est comparé à un débit calculé.

L'invention a pour but de lever ces indéterminations et d'élaborer le cas échéant un signal invalidant la mesure de débit nul délivrée par le débitmètre.

Plus précisément, l'invention concerne un procédé de contrôle en temps réel d'un système de mesure de débit de carburant pour un moteur d'avion équipé d'un débitmètre massique du type inductif connu en soi, caractérisé en ce qu'il consiste à évaluer en permanence qu'au moins les conditions suivantes sont réunies :
- le signal délivré par ledit débitmètre est inférieur à une valeur de seuil prédéterminée représentative d'un débit minimum indicatif d'un débit nul ou quasi-nul,
- le moteur fonctionne en autonomie à un régime supérieur à une valeur prédéterminée, et
à invalider la mesure délivrée par ledit débitmètre si lesdites conditions sont remplies simultanément.

Ainsi, l'ordinateur de bord est capable de distinguer si un signal délivré par le débitmètre indiquant un débit nul ou faible est crédible compte tenu des conditions de fonctionnement du moteur.

Parmi les conditions qu'on évalue en permanence, on peut aussi ajouter le fait qu'une vanne de coupure de carburant est effectivement ouverte.

Toutes les informations représentatives des conditions indiquées ci-dessus sont disponibles classiquement sur un avion de sorte qu'il suffit de collecter ces informations et de les comparer pour mettre en oeuvre le procédé de l'invention.

Cependant, de préférence, toutes ces conditions doivent être réunies pendant une durée suffisante, pour se protéger contre l'inertie naturelle du débitmètre lors d'une fermeture de la vanne de coupure de carburant suivie d'une réouverture immédiate. Cette opération est parfois provoquée volontairement par le pilote. A cet effet, la mesure de débit n'est invalidée que si lesdites conditions sont réunies simultanément pendant un intervalle de temps prédéterminé. Cet intervalle de temps dépend des caractéristiques propres du débitmètre, et plus particulièrement sa constante de temps, il peut être notamment de l'ordre de 5 s.

L'invention concerne également une installation de contrôle, notamment en temps réel, d'un système de mesure de débit de carburant pour un moteur d'avion équipé d'un débitmètre massique du type inductif connu en soi, caractérisée en ce qu'elle comprend un circuit de logique combinatoire de type additif comprenant au moins :
- une entrée reliée à un moyen comparateur recevant le signal dudit débitmètre et le comparant à une valeur de seuil prédéterminée représentative d'un débit minimum indicatif d'un débit nul ou quasi-nul,
- une entrée recevant un signal représentatif du régime du moteur en autonomie, et
en ce que la sortie dudit circuit de logique combinatoire est reliée à des moyens pour au moins signaler une défaillance du débitmètre.

Par "circuit de logique combinatoire de type additif" on entend par exemple un circuit comportant une fonction ET ou NON-ET recevant les informations ou équivalent.

Avantageusement, le circuit de logique combinatoire comporte au moins une entrée supplémentaire recevant un signal représentatif du fait qu'une vanne de coupure de carburant est ouverte.

Selon une caractéristique avantageuse, des moyens de temporisation sont intégrés audit circuit de logique combinatoire. De cette façon, l'information de défaillance du débitmètre n'est validée qu'au bout d'un intervalle de temps pendant lequel toutes les conditions définies ci-dessus ont été réunies.

L'invention sera mieux comprise et d'autres avantages de celle-ci apparaîtront plus clairement à la lumière de la description qui va suivre d'un mode de réalisation d'une installation de contrôle conforme à son principe, donnée uniquement à titre d'exemple et faite en référence aux dessins annexés, dans lesquels :
- la figure 1 est une vue schématique en perspective éclatée d'un débitmètre massique du type inductif, auquel s'applique notamment l'invention ; et
- la figure 2 est un schéma bloc de l'installation de contrôle d'un système de mesure de débit de carburant d'un moteur d'avion, comprenant un tel débitmètre.

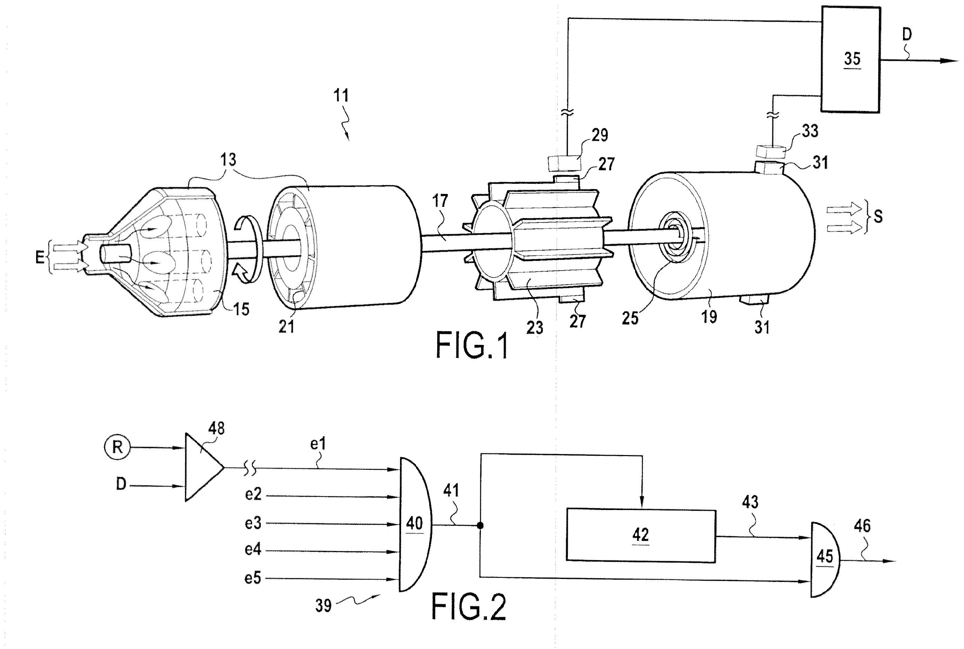

Sur la figure 1, on a représenté un débitmètre massique 11 du type inductif auquel peut notamment s'appliquer l'invention. Ce débitmètre comprend un boîtier 13 formant élément de conduit, traversé par le carburant. Ce boîtier comporte une entrée de fluide E et une sortie de fluide S opposée. Il abrite, du côté de l'entrée, un petit rotor de turbine 15 traversé par le fluide. Ce rotor entraîne en rotation un arbre 17 agencé axialement à l'intérieur du boîtier. L'arbre 17 est en outre fixé à un tambour rotatif 19 situé près de la sortie. En aval du rotor 15, une couronne d'aubes fixes formant un redresseur 21 est située en amont d'une roue à ailettes 23 montée en rotation autour de l'arbre. Cette roue est reliée à l'arbre 17, donc au tambour 19, par l'intermédiaire d'un ressort 25.

La roue à ailettes 23 porte des aimants 27 passant en regard d'une première bobine 29. Le tambour 19 porte des aimants 31 passant en regard d'une seconde bobine 33. On sait que les impulsions délivrées par les bobines ont la même fréquence mais que leur déphasage est représentatif du débit massique de fluide (le carburant) traversant le débitmètre. A partir des "paires" d'impulsions délivrées par les deux bobines, on peut élaborer une succession d'impulsions à flanc raide, (par exemple au moyen d'un compteur bistable 35). La durée d'une telle impulsion est représentative de ce déphasage donc du débit. Cette information D est acquise par un calculateur de bord, non représenté ; elle est par exemple exploitée pour envoyer au pilote une information sur la consommation en carburant du moteur d'avion.

Dans le cas où l'information de débit D indique un débit nul ou presque nul, il est souhaitable que le calculateur de bord puisse lever l'indétermination entre plusieurs possibilités, c'est-à-dire un débit effectivement nul ou une mesure erronée du débitmètre résultant d'une défaillance de celui-ci, par exemple en raison du givre ou encore pour une autre cause telle qu'une erreur de maintenance (harnais mal branché, par exemple).

Ce problème est résolu par l'installation de contrôle de la figure 2 mettant en oeuvre le procédé défini ci-dessus.

Cette installation de contrôle comprend un circuit de logique combinatoire 39 de type additif comprenant principalement une porte de type ET 40 comprenant plusieurs entrées et une sortie 41 reliée à des moyens de temporisation 42. La sortie 43 des moyens de temporisation et celle de la porte ET 40 sont reliées à deux entrées d'une porte ET 45. La sortie 46 de cette porte ET 45, délivre un signal permettant de distinguer si l'information de débit donnée par le débitmètre doit être validée ou non.

Plus particulièrement, la porte ET 40 comporte une entrée e1 reliée à la sortie d'un comparateur 48. Ce comparateur reçoit d'une part le signal D délivré par le compteur bistable 35 de la figure 1 et d'autre part une valeur de référence R représentative d'un seuil de débit minimum. Ce débit minimum est par exemple le débit d'accrochage du débitmètre, de l'ordre de 65 kg/h.

Une deuxième entrée e2 de la porte ET reçoit une information indiquant que le moteur de l'avion fonctionne effectivement en autonomie à un régime supérieur à une valeur prédéterminée. Par exemple, cette valeur prédéterminée peut être le régime de coupure du démarreur. En effet, si le moteur fonctionne à un régime supérieur, cela signifie qu'il fonctionne en autonomie et non plus grâce au démarreur. Par exemple, un capteur peut mesurer la vitesse de rotation d'un arbre, et un comparateur peut comparer cette vitesse à une valeur représentant le régime de coupure du démarreur. Une troisième entrée e3 de la porte ET peut aussi recevoir une information élaborée par le calculateur et constituant un statut de validité certifiant que l'information présente à l'entrée e2 est fiable.

Une quatrième entrée e4 de la porte ET 40 reçoit une information indiquant que la vanne de coupure de carburant est bien commandée à l'ouverture.

Une cinquième entrée e5 de la porte ET 40 reçoit une information élaborée par le calculateur et constituant un statut de validité certifiant que l'information présente à l'entrée e4 est fiable.

Si toutes les informations reçues sur les différentes entrées de la porte ET 40 sont "positives", alors on est dans la situation suivante :
- l'information de débit délivré par le débitmètre indique un débit nul ou quasi-nul,
- le moteur fonctionne normalement en autonomie,
- la vanne de coupure de carburant est ouverte.

La conséquence est que le débitmètre 11 est a priori défectueux ou en tout cas que l'information qu'il délivre n'est pas correcte. Dans ces conditions, le signal OUI délivré à la sortie 41 de la porte ET 40 est appliqué à une entrée de la porte ET 45 et à l'entrée des moyens de temporisation 42 dont la sortie 43 est reliée à l'autre entrée de la porte ET 45.

Ces moyens de temporisation peuvent être constitués par un compteur associé à une horloge. Si la sortie 41 de la porte ET 40 est OUI, un compteur est incrémenté. Si la sortie est NON, le compteur est réinitialisé. Si la sortie 41 est OUI pendant un intervalle de temps prédéterminé, alors, le circuit de temporisation émet un signal OUI à l'entrée de la porte ET 45. A partir de ce moment, l'information de débit est déclarée invalide, par l'apparition d'un OUI à la sortie 46.

Deux cas peuvent se produire. La panne est présente avant la mise en marche du moteur, c'est le cas par exemple si un harnais a été mal rebranché lors d'une opération de maintenance. La panne peut aussi paraître en vol si le débitmètre est endommagé ou si son fonctionnement est perturbé par des problèmes de givrage. L'invention permet de détecter les deux types de panne indiqués ci-dessus.

## Revendications

1. Procédé de contrôle en temps réel d'un système de mesure de débit de carburant pour un moteur d'avion équipé d'un débitmètre massique (11) du type inductif connu en soi, **caractérisé en ce qu'**il consiste à évaluer en permanence qu'au moins les conditions suivantes sont réunies :
- le signal délivré par ledit débitmètre est inférieur à une valeur de seuil prédéterminée (e1, 40) représentative d'un débit minimum indicatif d'un débit nul ou quasi-nul,
- le moteur fonctionne en autonomie à un régime supérieur à une valeur prédéterminée (e2, e3, 40), et
à invalider la mesure délivrée par ledit débitmètre si lesdites conditions sont remplies simultanément.

2. Procédé selon la revendication 1, **caractérisé en ce que**, parmi les conditions qu'on évalue en permanence, on prend aussi en compte le fait qu'une vanne de coupure de carburant est ouverte (e4, e5, 40).

3. Procédé selon la revendication 1 ou 2, **caractérisé en ce que** ladite mesure de débit n'est invalidée que si lesdites conditions sont réunies simultanément pendant un intervalle de temps (42) prédéterminé, dépendant du débitmètre utilisé.

4. Procédé selon la revendication 3, **caractérisé en ce que** cet intervalle de temps est de l'ordre de 5 s.

5. Installation de contrôle d'un système de mesure de débit de carburant pour un moteur d'avion équipé d'un débitmètre massique (11) du type inductif, connu en soi, **caractérisée en ce qu'**elle comprend un circuit de logique combinatoire de type additif (40, 45) comprenant au moins :
- une entrée (e1) reliée à un moyen comparateur (48) recevant le signal dudit débitmètre et le comparant à une valeur de seuil prédéterminée représentative d'un débit minimum indicatif d'un débit nul ou quasi-nul,
- une entrée (e2, e3) recevant un signal représentatif du régime du moteur en autonomie, et
**en ce que** la sortie dudit circuit de logique combinatoire est reliée à des moyens pour au moins signaler une défaillance du débitmètre et invalider la mesure délivrée par ledit débitmètre selon le procédé de l'une quelconque des revendications 1 à 4.

6. Installation selon la revendication 5, **caractérisée en ce que** ledit circuit de logique combinatoire comporte au moins une entrée supplémentaire (e4, e5) recevant un signal représentatif du fait qu'une vanne de coupure de carburant est ouverte.

7. Installation selon la revendication 5 ou 6, **caractérisée en ce que** des moyens de temporisation (42) sont intégrés audit circuit de logique combinatoire pour ne valider ladite défaillance qu'au bout d'un intervalle de temps prédéterminé où lesdites conditions sont réunies, dépendant du débitmètre utilisé et plus précisément de sa constante de temps.

## Patentansprüche

1. Verfahren zur Echtzeitsteuerung eines Kraftstoffdurchflussmesssystems für ein Flugzeugtriebwerk, das mit einem an sich bekannten Massendurchflussmesser (11) vom induktiven Typ ausgestattet ist, **dadurch gekennzeichnet, dass** es darin besteht, kontinuierlich zu bewerten, ob mindestens die folgenden Bedingungen erfüllt sind:
- das von dem Durchflussmesser abgegebene Signal ist kleiner als ein vorbestimmter Schwellenwert (e1, 40), der für einen minimalen indikativen Durchfluss eines Null- oder nahe Null-Durchflusses repräsentativ ist,
- das Triebwerk arbeitet autonom mit einer Geschwindigkeit oberhalb eines vorbestimmten Wertes (e2, e3, 40), und
die von dem Durchflussmesser gelieferte Messung für ungültig zu erklären, wenn diese Bedingungen gleichzeitig erfüllt sind.

2. Verfahren gemäß Anspruch 1, **dadurch gekennzeichnet, dass** unter den kontinuierlich bewerteten Bedingungen auch berücksichtigt wird, dass ein Kraftstoff-Absperrventil geöffnet ist (e4, e5, 40).

3. Verfahren gemäß Anspruch 1 oder 2, **dadurch gekennzeichnet, dass** die Durchflussmessung nur dann für ungültig erklärt wird, wenn die Bedingungen gleichzeitig während eines vorbestimmten Zeitintervalls (42) in Abhängigkeit von dem verwendeten Durchflussmesser erfüllt werden.

4. Verfahren gemäß Anspruch 3, **dadurch gekennzeichnet, dass** dieses Zeitintervall in der Größenordnung von 5 s liegt.

5. Anlage zur Echtzeitsteuerung eines Kraftstoffdurchflussmesssystems für ein Flugzeugtriebwerk, das mit einem an sich bekannten Massendurchflussmesser (11) vom induktiven Typ ausgestattet ist, **dadurch gekennzeichnet, dass** sie eine kombinatorische logische Additivschaltung (40, 45) enthält, umfassend zumindest:
- einen Eingang (e1), der mit einer Vergleichseinrichtung (48) verbunden ist, die das Signal des Durchflussmessers empfängt und mit einem vorbestimmten Schwellenwert vergleicht, der für einen minimalen indikativen Durchfluss eines Null- oder nahe Null-Durchflusses repräsentativ ist,
- einen Eingang (e2, e3), der ein für die Motordrehzahl repräsentatives, autonomes Signal empfängt, und
dass der Ausgang der kombinatorischen logischen Schaltung mit einer Einrichtung verbunden ist, die zumindest einen Ausfall des Durchflussmessers signalisiert und die von dem Durchflussmesser gelieferte Messung gemäß dem Verfahren eines der Ansprüche 1 bis 4 für ungültig erklärt.

6. Anlage gemäß Anspruch 5, **dadurch gekennzeichnet, dass** die kombinatorische logische Schaltung mindestens einen zusätzlichen Eingang (e4, e5) aufweist, der ein Signal empfängt, das repräsentativ dafür ist, dass ein Kraftstoff-Absperrventil geöffnet ist.

7. Anlage nach Anspruch 5 oder 6, **dadurch gekennzeichnet, dass** Zeitsteuerungsmittel (42) in der kombinatorischem logischem Schaltung integriert sind, um den Ausfall erst am Ende eines vorbestimmten Zeitintervalls zu validieren, zu dem die Bedingungen erfüllt sind, in Abhängigkeit von dem verwendeten Durchflussmesser und genauer von dessen Zeitkonstante.

## Claims

1. A method of real time monitoring of a fuel flow rate measuring system for an airplane engine fitted with a mass flowmeter (11) of the inductive type that is known per se, the method being **characterized in that** it consists in evaluating continuously whether at least the following conditions are satisfied:
• the signal delivered by said flowmeter is less than a predetermined threshold value (e1,40) representative of a minimum flowrate indicating a zero or nearly zero flowrate;
• the engine is running on its own at a speed greater than a predetermined value (e2, e3, 40); and
in invalidating the measurement delivered by said flowmeter if said conditions are satisfied simultaneously.

2. A method according to claim 1, **characterized in that** among the conditions that are evaluated continuously, account is also taken of the fact that a fuel cutoff valve is open (e4, e5, 40).

3. A method according to claim 1 or claim 2, **characterized in that** said flow rate measurement is invalidated only if said conditions are satisfied simultaneously for a predetermined time interval (42) that depends on the flowmeter used.

4. A method according to claim 3, **characterized in that** said time interval is of the order of 5 s.

5. A monitoring installation for monitoring a fuel flow rate measuring system for an airplane engine fitted with a mass flowmeter (11) of the inductive type that is known per se, the installation being **characterized in that** it comprises a combinatorial logic circuit of the additive type (40, 45) comprising at least:
• an input (el) connected to comparator means (48) receiving the signal from said flowmeter and comparing it with a predetermined threshold value representative of a minimum flowrate indicating a zero or nearly zero flowrate;
• an input (e2, e3) receiving a signal representative of the speed of the engine running on its own; and
**in that** the output from said combinatorial logic circuit is connected to means for at least signaling a failure of the flowmeter and invalidating the measurement delivered by said flowmeter as per the method of any one of claims 1 to 4.

6. An installation according to claim 5, **characterized in that** said combinatorial logic circuit includes at least one additional input (e4, e5) receiving a signal representative of the fact that a fuel cutoff valve is open.

7. An installation according to claim 5 or claim 6, **characterized in that** timer means (42) are incorporated in said combinatorial logic circuit to validate said failure only after a predetermined time interval during which said conditions are satisfied, the time interval depending on the flowmeter used and more precisely on its time constant.
